# EUROPEAN PATENT APPLICATION

(11) **EP 4 481 871 A1**
(43) Date of publication of application: **25.12.2024**
(21) Application number: 22927353.7
(22) Date of filing: 23.12.2022
(51) Int. Cl.: H01M 10/052, H01M 10/04, H01M 10/0567, H01M 10/0568, H01M 10/0587, H01M 50/107

(54) **CYLINDRICAL NONAQUEOUS ELECTROLYTE SECONDARY BATTERY**

(30) Priority: 18.02.2022 JP 2022023659
(71) Applicant: Panasonic Intellectual Property Management Co., Ltd., Kadoma-shi, Osaka 571-0057 (JP)
(72) Inventor: KOTAKE, Hiroki, Kadoma-shi, Osaka 571-0057 (JP); KUMAGAI, Jun, Kadoma-shi, Osaka 571-0057 (JP)
(74) Representative: Novagraaf International SA
(86) International application number: PCT/JP2022/047541
(87) International publication number: WO 2023/157470

(57) **Abstract**

A secondary battery includes a battery case, an electrode group, and nonaqueous electrolyte. An outer diameter R ranges from 3.0 to 6.5 mm. A ratio r/R of an inner diameter r of a hollow in the electrode group to an outer-diameter R ranges from 0.1 to 0.3. The nonaqueous electrolyte includes at least one selected from LiSO₃F and LiFSI. In the case that the nonaqueous electrolyte includes LiSO₃F, the concentration of LiSO₃F is 1.5% by mass or less in a case that the outer-diameter R ranges from 3.0 to 5 mm, and is 1.2% by mass or less I a case that the outer-diameter R is more than 5 mm and is 6.5 mm or less. In the case that the nonaqueous electrolyte includes LiFSI, the concentration of LiFSI is 1.1 mol/L or less in a case that the outer-diameter R ranges from 3.0 to 3.5 mm, and is 1.0 mol/L or less in a case that the outer-diameter R is more than 3.5 mm and is 6.5 mm or less.

## Description

### TECHNICAL FIELD

The present disclosure relates to a cylindrical nonaqueous electrolyte secondary battery.

### BACKGROUND ART

A nonaqueous electrolyte secondary battery, typified by a lithium-ion secondary battery, has a high capacity and output so that it has been widely used as a drive power supply for notebook personal computers, mobile phones, and any other mobile electronic devices.

PTL 1 proposes the following positive electrode and nonaqueous electrolyte in a nonaqueous electrolyte secondary battery. The positive electrode includes a positive-electrode active material layer, an insulating layer containing an inorganic filler, and a boundary layer. The nonaqueous electrolyte contains lithium fluorosulfonate. In this case, the boundary layer contains the positive electrode active material included in the positive electrode active material layer, and the inorganic filler included in the insulating layer. The boundary layer further contains hydrated alumina.

PTL 2 proposes, at least, a nonaqueous solvent, a solute, and an electrolyte for use in a nonaqueous electrolyte battery. The electrolyte contains an imide compound having a phosphoryl structure represented by a specific formula.

In recent years, as mobile electronic devices have become smaller and more functionalized, a demand for small power supplies with a high capacity or a high output has risen. For example, a small-sized cylindrical secondary battery has also been attempted which is called such as a pin-shaped battery.

PTL 3 proposes a cylindrical secondary battery in which a negative-electrode mixture layer has a non-facing region where the layer does not face a positive-electrode mixture layer, in which the negative-electrode mixture layer has a density ranging from 1.25 g/cm³ to 1.43 g/cm³, in which the proportion of the total length of the non-facing region to the total length of the negative-electrode mixture layer is 0.09 or more, and in which an electrode group has a hollow therein with an inner diameter of 2.0 mm or less.

### CITATION LIST

### Patent Literature

PTL 1: Japanese Patent Laid-Open Publication No. 2021-44138
PTL 2: International Publication WO 2019/146705
PTL 3: International Publication WO 2019/107049

### SUMMARY OF INVENTION

In a small-sized cylindrical nonaqueous secondary battery, an electrode group has a hollow having a small inner diameter and the amount of its nonaqueous electrolyte is limited. Therefore, the charge/discharge reaction in the electrode group tends to be uneven compared to other large-sized batteries. In the small-sized cylindrical nonaqueous secondary battery, in particular, the hollow has such a large curvature that the material of its electrodes is prone to be cracked, so that internal short-circuits may likely to occur caused by the electrode material having fallen off.

A cylindrical nonaqueous electrolyte secondary battery according to an aspect of the present disclosure includes a battery case having a cylindrical shape, a wound electrode group accommodated in the battery case, and a nonaqueous electrolyte accommodated in the battery case. An outer diameter R of the battery case is 3.0 mm or more and 6.5 mm or less. The electrode group has a hollow therein and includes one or more electrodes wound around the hollow. A ratio r/R of an inner diameter r of the hollow of the electrode group to the outer diameter R is 0.1 or more and 0.3 or less. The nonaqueous electrolyte includes at least one selected from the group consisting of LiSO₃F and LiFSI. In a case that the nonaqueous electrolyte includes LiSO₃F, a concentration of LiSO₃F in the nonaqueous electrolyte is 1.5% by mass or less in a case of the outer diameter R being 3.0 mm or more and 5 mm or less, and a concentration of LiSO₃F is 1.2% by mass or less in a case of the outer diameter R exceeding 5 mm and being 6.5 mm or less. In a case that the nonaqueous electrolyte includes LiFSI, a concentration of LiFSI in the nonaqueous electrolyte is 1.1 mol/L or less in a case of the outer diameter R being 3.0 mm or more and 3.5 mm or less, and the concentration of LiFSI is 1.0 mol/L or less in a case of the outer diameter R exceeding 3.5 mm and being 6.5 mm or less.

In the cylindrical nonaqueous electrolyte secondary battery in which the battery case has the outer diameter R of 3.0 mm or more and 6.5 mm or less, its internal short-circuits is reduced.

### BRIEF DESCRIPTION OF DRAWING

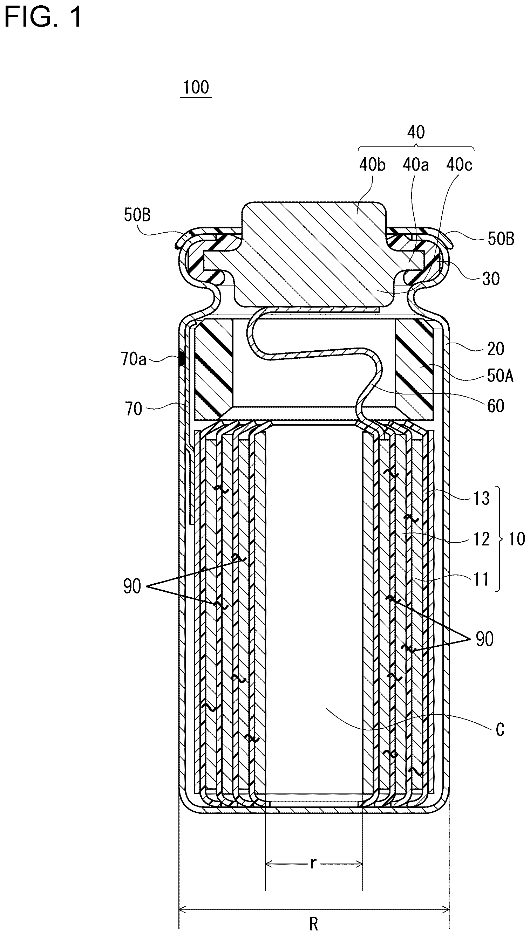

FIG. 1 is a schematic longitudinal cross-sectional view of a cylindrical nonaqueous electrolyte secondary battery (a pin-shaped, cylindrical nonaqueous electrolyte secondary battery) according to an exemplary embodiment of the present disclosure.

### DESCRIPTION OF EMBODIMENTS

Aiming at improving performance of nonaqueous electrolyte secondary batteries such as a lithium-ion secondary battery, various attempts have been made to devise a configuration of their electrodes and electrode groups, a component of their nonaqueous electrolytes, and any other items. From the standpoint of ensuring a high capacity, a larger battery size is advantageous. Therefore, lithium-ion secondary batteries featuring high capacities have conventionally been widely used which have a battery diameter of about 14 mm to about 18 mm and a battery height of about 40 mm to about 65 mm. With such a battery, its electrodes have such large areas that it tends to face the problem of mixing of foreign matter and, in addition, the surface pressure of the whole of its electrode group rises in the case of the large number of winding turns for the electrode group. For this reason, these are responsible for most cases of internal short-circuits at the initial stage.

In contrast, in a cylindrical nonaqueous electrolyte secondary battery (a pin-shaped, cylindrical nonaqueous electrolyte secondary battery) having a battery diameter of 6.5 mm or less, its wound electrode group has a hollow therein with an inner diameter r is so small that the curvature of the electrode is large at the innermost peripheral portion. The innermost peripheral portion of the electrode undergoes the great influence of stresses due to expansion and contraction of the electrode material accompanying charging and discharging. Changes in volume due to the expansion and contraction are particularly larger in the negative electrode than in the positive electrode. Therefore, at the innermost peripheral portion of the negative electrode, the electrode material of the negative electrode is likely to crack and fall off. Resulting from the falling-off of the electrode material, the pin-shaped, cylindrical nonaqueous electrolyte secondary battery tends to suffer internal short-circuits at the initial stage. It is considered that the pin-type, cylindrical nonaqueous electrolyte secondary battery is more likely to suffer internal short-circuits caused by the falling-off of electrode material than large-sized batteries. The small inner diameter "r" is responsible for the internal short-circuits even when ratio r/R of the pin-type battery is equal to ratios r/R of the large-sized batteries, where the r/R of a battery is the ratio of the inner diameter "r" of a hollow of the electrode group of the battery to the outer diameter R of its battery case. In addition, the pin-type, cylindrical nonaqueous electrolyte secondary battery is such that the influence of stresses due to the expansion and contraction causes the distance to become smaller between the positive and negative electrodes at the innermost periphery or in the vicinity thereof. This results in the tendency for a reaction to be uneven between on the inner peripheral side of the wound electrode group and on the outer peripheral sides of the wound electrode group. For this reason, the proceeding of charge/discharge cycles tends to cause "electrolyte depletion," a phenomenon in which the amount of the nonaqueous electrolyte is insufficient at the innermost peripheral portion of the electrode group. In particular, in the case where the charge/discharge is repeated at a high rate, the electrolyte depletion occurs remarkably. The electrolyte depletion causes lithium metal to be deposited on the negative electrode, which further increases the stresses, resulting in the more remarkable degree of falling-off of the electrode material of the negative electrode. For these reasons, with the pin-shaped, cylindrical nonaqueous electrolyte secondary battery, even if internal short-circuits can be reduced at the initial stage, a repetition of charge/discharge (in particular, a high-rate charge/discharge) in service will suffer internal short-circuits caused by the falling-off of the electrode material, resulting in a decrease in the cycle life of the battery. Such internal short-circuits caused by the falling-off of electrode material, are almost not the case for large-sized batteries (e.g., batteries having a large inner diameter "r") or batteries having a large ratio r/R. With the pin-type, cylindrical nonaqueous electrolyte secondary battery, the ratio r/R is difficult to enlarge for the purpose of ensuring the capacity to some extent. Therefore, the above-described phenomenon, i.e., internal short-circuits resulting from the falling-off of electrode material, is almost not a problem for large-sized batteries but is a problem unique to the pin-shaped, cylindrical nonaqueous electrolyte secondary battery. Moreover, during charging and discharging, both the condition of the electrodes and the movement of the nonaqueous electrolyte are completely different between the pin-shaped, cylindrical nonaqueous electrolyte secondary battery and large-sized batteries. For this reason, a means of improving large-sized batteries cannot be simply applied to the pin-shaped, cylindrical nonaqueous electrolyte secondary battery, aiming at obtaining the same advantage.

In view of the above, a cylindrical nonaqueous electrolyte secondary battery according to the present disclosure includes a cylindrical battery case, and a wound electrode group and nonaqueous electrolyte both of which are accommodated in the battery case. The outer diameter R of the battery case is 3.0 mm or more and 6.5 mm or less. The ratio r/R of the inner diameter "r" of a hollow of the electrode group to the outer diameter R is 0.1 or more and 0.3 or less. The nonaqueous electrolyte includes at least one selected from the group consisting of LiSO₃F and LiFSI. Here, LiSO₃F is lithium fluorosulfonate, and LiFSI is lithium bis(fluorosulfonyl)imide. In the case where the nonaqueous electrolyte includes LiSO₃F, the concentration of LiSO₃F in the nonaqueous electrolyte is 1.5% by mass or less in a case that the outer diameter R is 3.0 mm or more and 5 mm or less, and the concentration is 1.2% by mass or less in a case that the outer diameter R exceeds 5 mm and is 6.5 mm or less. In the case where the nonaqueous electrolyte includes LiFSI, the concentration of LiFSI in the nonaqueous electrolyte is 1.1 mol/L or less in a case that the outer diameter R is 3.0 mm or more and 3.5 mm or less, and the concentration is 1.0 mol/L or less in a case that the outer diameter R exceeds 3.5 mm and is 6.5 mm or less. In the case where the outer diameter R is in the range of 3.0 mm or more and 6.5 mm or less and where the nonaqueous electrolyte includes LiSO₃F, the concentration of LiSO₃F in the nonaqueous electrolyte may be 1.2% by mass or less. In the case where the outer diameter R is in the range of 3.0 mm or more and 6.5 mm or less and where the nonaqueous electrolyte includes LiFSI, the concentration of LiFSI may be 1.0 mol/L or less.

In the cylindrical nonaqueous electrolyte secondary battery according to the present disclosure, the size of the battery is so small that the outer diameter R of the battery case is 3.0 mm or more and 6.5 mm or less and that the ratio r/R is 0.1 or more and 0.3 or less, and the nonaqueous electrolyte includes at least one of LiSO₃F and LiFSI in the concentration as described above. This configuration prevents falling-off of the electrode material at the innermost peripheral portion of the negative electrode of the wound electrode group. Therefore, this reduces the occurrence of internal short-circuits caused by the falling-off of the electrode material.

Examples of an additive used in the nonaqueous electrolyte of a large-sized nonaqueous electrolyte secondary battery include fluoroethylene carbonate (FEC), propanesultone (PS), and vinylene carbonate (VC). These additives form a solid electrolyte interface (SEI) film on the surface of the negative electrode including the nonaqueous electrolyte. In the case of the pin-shaped, cylindrical nonaqueous electrolyte secondary battery, such an additive in place of LiSO₃F or LiFSI provides almost no effect of reducing the occurrence of internal short-circuits. The reason for this is that the SEI film formed on the surface of the negative electrode has poor film quality, high electrical resistance, or any other disadvantage, which causes rapid or nonuniform reaction, resulting in no effect of preventing the falling-off of the electrode material of the negative electrode.

The reason why, in the present disclosure, the occurrence of internal short-circuits caused by the falling-off of the electrode material is reduced is thought as follows: In the case where the nonaqueous electrolyte includes LiSO₃F, it is considered that an SEI film derived from LiSO₃F is formed on the surface of the negative electrode at and after the initial stage. In the case where the nonaqueous electrolyte includes LiFSI, it is considered that an SEI film derived from LiFSI is formed on the surface of the negative electrode at and after the initial stage, and that the electrical resistance of the nonaqueous electrolyte is reduced, resulting in ease of proceeding of the reaction more evenly. In the case where the concentration of LiSO₃F in the nonaqueous electrolyte is within the range described above, it is considered that the quality of the SEI film derived from LiSO₃F formed on the surface of the negative electrode is so high that the SEI film is relatively uniform and strong and also has relatively low electrical resistance. Moreover, in the case where the concentration of LiFSI in the nonaqueous electrolyte is within the range described above, it is considered that the quality of the SEI film derived from LiFSI formed on the surface of the negative electrode is so high that the SEI film has relatively low electrical resistance and allows a more uniform reaction. Such an SEI film is considered to prevent rapid proceeding of the charge/discharge reaction on the inner peripheral side of the electrode group during break-in charge/discharge and initial charge, which allows the charge/discharge reaction to take place more uniformly over the whole of the electrode group. In this configuration, it is considered that the falling-off of the electrode material at the innermost peripheral portion of the negative electrode is reduced at the initial stage. Therefore, although the ratio r/R and the outer diameter of the battery case are relatively small as described above, the internal short-circuits at the initial stage caused by the falling-off of the electrode material is reduced. In addition, since the SEI film allows the charge/discharge reaction to take place more uniformly over the whole of the electrode group, the falling-off of the electrode material is reduced at the innermost peripheral portion of the negative electrode when subjected to a high-rate repetition of charge/discharge. Therefore, although the ratio r/R and the outer diameter of the battery case are relatively small as described above, the reduction of occurrence of the internal short-circuits caused by the falling-off of the electrode material, results in a reduction of the decrease in capacity when subjected to a high-rate repetition of charge/discharge. This allows the high-capacity retention ratio in a high-rate charge/discharge cycle. In the case of using LiFSI, it is considered that the electrical resistance of the nonaqueous electrolyte is held to be low, which also ensures the high-capacity retention ratio.

The electrode group is formed by winding both a positive electrode and a negative electrode with a separator placed in between, followed by pulling out a winding core from the resulting group. The pulling-out of the winding core leaves a space at the center portion of the electrode group. The space is called the hollow. That is, the electrode group includes one or more electrodes (positive electrode and negative electrode) wound about the hollow. The separator or electrode (e.g., negative electrode) held by the winding core during the wounding may be left at the center portion of the hollow. In accordance with the present embodiment, the hollow is considered as one in which such a left part of the separator or electrode is neglected that would remain in the center portion with an interstice being present on the outer peripheral side of the center portion.

The hollow is determined from the cross section of the electrode group when cut in a direction perpendicular to the winding axis of the electrode group, or from the end surface of the electrode group when viewed in a direction perpendicular to the winding axis of the electrode group. The diameter of the cross section or the end surface of the hollow is the inner diameter r of the hollow. It is conceivable that the shape of the hollow in the cross section or the end surface described above may not necessarily be a perfect circle. In this case, the inner diameter of r of the hollow means the diameter of an equivalent circle of the innermost periphery of the electrode group (i.e., such an equivalent circle is a circle having the same area as that of the cross section or the end surface of the hollow).

In a cylindrical nonaqueous electrolyte secondary battery, the battery case often has a cylindrical shape with a bottom. In accordance with the present disclosure, the outer diameter R of the battery case is the maximum diameter of the cylindrical nonaqueous electrolyte secondary battery when viewed from below the underside of the battery case (provided the maximum diameter is determined excluding an exterior film and a sealing section of the battery). Hereinafter, a cylindrical nonaqueous electrolyte secondary battery in which a battery case has an outer diameter R of 3.0 mm or more and 6.5 mm or less may be referred to as a pin-shaped secondary battery. Such a cylindrical nonaqueous electrolyte secondary battery includes the cylindrical nonaqueous electrolyte secondary battery according to the present disclosure.

In the pin-shaped secondary battery according to the present disclosure, LiSO₃F and LiFSI are decomposed and consumed to form an SEI film. During storing or using the battery, the concentrations of LiSO₃F and LiFSI in the nonaqueous electrolyte change. Therefore, when analyzing each of these concentrations in the nonaqueous electrolyte collected from a pin-shaped secondary battery, it is sufficient that either LiSO₃F or LiFSI remains in the nonaqueous electrolyte in a concentration equal to or more than the lower detection limit of concentration.

Hereinafter, the pin-shaped secondary battery according to the present disclosure will be detailed below.

### Electrode Group

The wound electrode group includes a positive electrode, a negative electrode, and a separator interposed between the electrodes. The winding core used in winding has a round column shape. Such a winding core is used to wind the positive and negative electrodes about the core while the separator is interposed between the electrodes, thereby forming a cylindrical electrode group. The cylindrical electrode group may have another shape that includes a similar-to-cylinder shape, such as a cylinder partially bent and a cylinder slightly squashed in a diameter direction of the cylinder.

A hollow is provided in the center portion of the electrode group. The hollow has been left after the winding core was pulled out therefrom. In the present disclosure, the ratio r/R of the inner diameter r of the hollow to the outer diameter R of the battery case is 0.1 or more and 0.3 or less, and may be 0.1 or more and 0.2 or less. In the case where the ratio r/R is so small in this way, the curvature of the electrode group is large on the inner peripheral side (in particular, at the innermost peripheral portion of the electrodes), which tends to remarkably cause the falling-off of the electrode materials (active material, electrode mixture, etc.). In the pin-shaped secondary battery according to the present disclosure, even in the case of the ratio r/R being so small in this way, the nonaqueous electrolyte includes at least one of LiSO₃F and LiFSI in a particular concentration. This configuration reduces occurrence of internal short-circuits caused by the falling-off of the electrode material, resulting in the reduction of a decrease in capacity when subjected to a high-rate charge/discharge.

The inner diameter r of the hollow may be determined within a range of 0.3 mm or more and 1.95 mm or less such that the ratio r/R falls in the range described above. The inner diameter r may be 0.4 mm or more and 1.95 mm or less, and may be 0.4 mm or more and 1.3 mm or less. In the case where the inner diameter is within these ranges, it provides a greater effect of preventing the falling-off of the electrode material, thereby allowing the further reduction in occurrence of the internal short-circuits.

The outer diameter rₑ of the electrode group is of a size that allows the electrode group to be accommodated in the battery case. The outer diameter rₑ of the electrode group is smaller than the outer diameter R of the battery case. The outer diameter rₑ means the diameter of an equivalent circle of the electrode group in the cross section or the end surface perpendicular to the winding axis, where the cross section and the end surface are the same ones used for determining the inner diameter r of the electrode group (that is, the equivalent circle is a circle having the same area that of the region surrounded by the outer edge of the electrode group in the cross section or the end surface).

The number of winding turns for the electrode group is determined in consideration of the desired capacity, the diameter of the electrode group, etc., for example.

In the pin-shaped secondary battery in a fully discharged state, the ratio Ra = rₑ/Rᵢ of the outer diameter rₑ of the electrode group to the inner diameter Rᵢ of the battery case is, for example, 90% or more and may be 95% or more. The ratio Ra is determined from the cross section that passes through the middle of the pin-shaped secondary battery in the longitudinal direction (the direction parallel to the winding axis) and that is perpendicular to the winding axis. In this cross section, the diameter of a cylindrical hollow surrounded by the inner wall of the battery case, is the inner diameter Rᵢ of the battery case. In the case where, in the foregoing cross section, the shape of the portion surrounded by the inner wall of the battery case is not a perfect circle, the inner diameter Rᵢ means the diameter of an equivalent circle, in the foregoing cross section, of the portion surrounded by the inner wall of the battery case (where the equivalent circle is a circle having the same area that of the portion surrounded by the inner wall in the cross section).

### Positive Electrode

The positive electrode includes a positive-electrode current collector, and a positive-electrode mixture layer formed on at least one main surface of the positive-electrode current collector.

Examples of the positive-electrode current collector include a metal foil. The metal foil may include at least one selected from the group consisting of aluminum and aluminum alloys. The thickness of the positive-electrode current collector is not particularly limited and, from the standpoint of miniaturization of the battery and the strength of the positive-electrode current collector, may be 10 µm or more and 50 µm or less, for example.

The positive-electrode mixture layer may be formed on one surface of the positive-electrode current collector or, from the standpoint of increasing the capacity, may be formed on both surfaces of the collector.

The thicker the positive-electrode mixture layer (i.e., the positive-electrode mixture layer formed on the one side of the positive-electrode current collector) is, the more the battery capacity is ensured on the one hand, but the more the electrode plate is likely to crack at the inner peripheral portion having a large curvature on the other hand. From the standpoint of achieving a high capacity and reducing cracks in the electrode plate at the inner peripheral portion, the thickness of the positive-electrode mixture layer may be 20 µm or more and 100 µm or less, and may also be 25 µm or more and 60 µm or less.

The positive-electrode mixture layer includes a positive-electrode active material. The positive-electrode active material is not particularly limited as long as it is usable in lithium-ion secondary batteries. Examples of the positive-electrode active material include lithium-containing transition metal oxides such as lithium cobalt oxide (LiCoO₂), lithium nickelate (LiNiO₂), lithium manganate (LiMn₂O₄), and lithium-containing composite oxides in which part of the Co, Ni, or Mn in the foregoing compounds is substituted by other element(s). Examples of the other element(s) include at least one selected from the group consisting of other transition metal elements and typical elements. From the standpoint of miniaturizing the battery and increasing the energy density, specific examples of the lithium-containing composite oxides include composite oxides represented by the general formula: Liₓ₁Ni_{y1}M^{a}_{1-y1}O₂ ... (1), and composite oxides represented by the general formula: Liₓ₂Ni_{y2}Co_{z1}M^{b}_{1-2-z1}O₂ ... (2).

In the general formula (1), element M^{a} is at least one selected from the group consisting of, for example, Na, Mg, Sc, Y, Mn, Fe, Co, Cu, Zn, Al, Cr, Pb, Sb, and B. Further, x1 and y1 satisfy 0 < x1 ≤ 1.2 and 0.5 < y1 ≤ 1.0. Note that x1 changes depending on charge and discharge.

In the formula (2), the element M^{b} is at least one selected from the group consisting of Mg, Ba, Al, Ti, Sr, Ca, V, Fe, Cu, Bi, Y, Zr, Mo, Tc, Ru, Ta, and W. For example, x2, y2, and z1 satisfy 0 < x2 ≤ 1.2 (preferably 0.9 ≤ x2 ≤ 1.2), 0.3 ≤ y2 ≤ 0.9, and 0.05 ≤ z1 ≤ 0.5. Note that x2 changes depending on charge and discharge. Moreover, in the formula (2), 0.01 ≤ 1-y2-z1 ≤ 0.3 may preferably hold.

The positive-electrode active material can be used singly or in a combination of two or more kinds.

The positive-electrode mixture layer may include at least one of a binder and a conductive agent as necessary. The binder may employ, for example, a binder usable in lithium-ion secondary batteries. Examples of the binder include at least one selected from the group consisting of fluorocarbon resins (such as polyvinylidene fluoride (PVdF)), rubbery polymers (such as styrene-butadiene rubber, styrene-methacrylic acid-butadiene copolymer, and fluorinated rubber), and polyacrylic acid. The amount of the binder in the positive-electrode mixture layer is, for example, 0.5 parts by mass or more and 5 parts by mass or less with respect to 100 parts by mass of the positive-electrode active material.

The conductive agent may employ, for example, a conductive agent usable in lithium-ion secondary batteries. Examples of the conductive agent include at least one selected from the group consisting of carbonaceous materials (such as graphite, carbon black, and carbon fibers), metal fibers, and conductive organic materials. In the case of the conductive agent being used, the amount of the conductive agent in the positive-electrode mixture layer is, for example, 0.5 parts by mass or more and 5 parts by mass or less with respect to 100 parts by mass of the positive-electrode active material.

The positive electrode may be formed by applying a positive-electrode slurry containing the positive-electrode active material and a dispersion medium on the surface of the positive-electrode current collector, followed by drying and then compressing the resulting product in the thickness direction. At least one of the binder and the conductive agent may be added to the positive-electrode slurry. The dispersion medium may employ water, an organic solvent such as N-methyl-2-pyrrolidone (NMP), and a mixed solvent thereof.

### Negative Electrode

The negative electrode includes a negative-electrode current collector, and a negative-electrode active material layer held on at least one main surface of the negative-electrode current collector.

The negative-electrode current collector is preferably made of a metal foil. Examples of the material of the metal foil include aluminum, aluminum alloys, copper, and copper alloys. The material of the negative-electrode current collector may be determined in accordance with the performance required for the pin-shaped secondary battery and the type of negative-electrode active material.

The negative-electrode active material layer may be formed only on one main surface of the negative-electrode current collector. However, from the standpoint of increasing the capacity, in at least part of the negative electrode, the negative-electrode active material layer may be preferably formed both one main surface and the other main surface on the opposite side of the negative-electrode current collector. In the wound electrode group, at least one of a winding-start point (on an inner peripheral side) and a winding-end point (on an outer peripheral side) may be configured such that the negative-electrode active material layer is formed only on one main surface in order to avoid the structure where the positive-electrode active material does not face the negative-electrode active material layer. A region on which no negative-electrode active material layer is formed may be provided on both main surfaces opposite to each other of the negative-electrode current collector. Moreover, in at least one of the winding-start point and the winding-end point, the positions of the end portions of the negative-electrode active material layers on one and the other main surfaces may be different from each other.

In the electrode group, the end portion on the innermost peripheral side of the negative electrode (more specifically, the portion where the negative-electrode active material is disposed thereon) may be disposed more inside than the end portion on the innermost peripheral side of the positive electrode (more specifically, the portion where the positive-electrode active material is disposed thereon). In other words, the negative electrode may have a larger proportion of a part at the innermost periphery of an electrode to the whole of the electrode than the positive electrode. The negative-electrode active material exhibits larger changes in volume than the positive-electrode active material due to its expansion and contraction accompanying charging and discharging. For this reason, in the case where the proportion of a part at the innermost periphery of the negative electrode to the whole of the negative electrode is larger than that of the positive electrode, the negative electrode tends to remarkably undergo the falling-off of the electrode material. Even in this case, since the nonaqueous electrolyte includes at least one of LiSO₃F and LiFSI in the concentration described above, it provides a large reduction in falling-off of the electrode material, resulting in the high effect of reducing the occurrence of internal short-circuits caused by the falling-off of the electrode material. Moreover, the portion on the innermost peripheral side of the negative electrode (more specifically, the portion where the negative-electrode active material is disposed thereon) may not face the positive electrode (more specifically, the portion where the positive-electrode active material is disposed thereon). In this case, the nonaqueous electrolyte can be easily held at the inner peripheral portion of the electrode group even at which a nonaqueous electrolyte tends to become insufficient, resulting in the higher effect of reducing the falling-off of the electrode material.

The thickness of the negative-electrode active material layer (the negative-electrode active material layer formed on one side of the negative-electrode current collector) may be 20 µm or more and 120 µm or less. The total thickness of the negative electrode is 80 µm or more and 250 µm or less, for example.

The negative-electrode active material included in the negative-electrode active material layer is not particularly limited, and may employ any active material as long as it is usable in lithium-ion secondary batteries. Examples of the negative-electrode active material include a material capable of reversibly storing and releasing lithium ions, and a material capable of reversibly alloying with lithium. Such materials include carbonaceous materials, silicon, silicon compounds, tin, tin compounds, and transition metal compounds. Examples of the carbonaceous materials include graphite materials (natural graphite, synthetic graphite, etc.) and amorphous carbon materials. Examples of the transition metal compounds include composite oxides containing lithium and titanium (e.g., lithium titanates such as Li₂TiO₃ and Li₄Ti₅O₁₂, and titanium-niobium composite oxides such as TiNb₂O₇, and Ti₂Nb₁₀O₂₉). The negative-electrode active material can be used singly or in a combination of two or more kinds.

The negative-electrode active material layer may be a deposited film of the negative-electrode active material, and may be a negative-electrode mixture layer that includes the negative-electrode active material and, as necessary, at least one of a binder and a thickener.

The binder may employ, for example, a binder usable in lithium-ion secondary batteries. The binder may be chosen from the above-described binders for the positive electrode.

The amount of the binder in the negative-electrode active material layer is, for example, 1 part by mass or more and 5 parts by mass or less with respect to 100 parts by mass of the negative-electrode active material.

The thickener may employ, for example, a thickener usable in lithium-ion secondary batteries. Examples of the thickener include cellulose ethers such as carboxymethyl cellulose (CMC) and a salt thereof (an alkali metal salt such as sodium salt, an ammonium salt, etc.).

The negative electrode may be formed by applying, on the surface of the negative-electrode current collector, a negative-electrode slurry containing both the negative-electrode active material and a dispersion medium, followed by drying and then compressing the resulting product in the thickness direction. At least one of the binder and the thickener may be added to the negative-electrode slurry. The dispersion medium may employ such as water, an organic solvent such as N-methyl-2-pyrrolidone (NMP), and a mixed solvent thereof. In addition, the negative electrode may be formed by depositing the negative-electrode active material on the surface of the negative-electrode current collector.

### Separator

The separator may employ, for example, a separator usable in lithium-ion secondary batteries. Examples of the separator include at least one selected from the group consisting of a microporous membrane, a woven fabric, and a nonwoven fabric. The separator may be a single layer, composite layer, or multi-layer. The separator may include one kind of material, and may include two or more kinds of materials.

Examples of the material of the separator include resin materials. The resin materials include one selected from the group consisting of polyolefin resins (polypropylene, polyethylene, etc.), polyamide resins, and polyimide resins.

The thickness of the separator is not particularly limited and, for example, may be appropriately determined to be in a range 5 µm or more and 300 µm or less. The thickness of the microporous membrane is, for example, 5 µm or more and 50 µm or less. The thickness of the nonwoven fabric is, for example, 50 µm or more and 300 µm or less.

### Nonaqueous Electrolyte

The nonaqueous electrolyte includes at least one selected from the group consisting of LiSO₃F and LiFSI. The nonaqueous electrolyte further includes a nonaqueous solvent. The nonaqueous electrolyte includes a solute (supporting salt). LiFSI may be used at least as part of the solute.

The concentrations of LiSO₃F and LiFSI in the nonaqueous electrolyte are within the particular range reduce the occurrence of internal short-circuits caused by the falling-off of the electrode material. The reduction in the occurrence of initial internal short-circuits, in turn, reduces a decrease in capacity when subjected to a high-rate repetition of charge/discharge.

More specifically, in the case where the nonaqueous electrolyte includes LiSO₃F, the concentration of LiSO₃F in the nonaqueous electrolyte is 1.5% by mass or less in a case that the outer diameter R is 3.0 mm or more and 5 mm or less, and the concentration is 1.2% by mass or less in a case that the outer diameter R is more than 5 mm and is 6.5 mm or less. Moreover, in a case that the outer diameter R is 3.0 mm or more and 6.5 mm or less, the concentration of LiSO₃F in the nonaqueous electrolyte may be 1.2% by mass or less. From the standpoint of ease of forming the SEI film having a more uniform and excellent film quality, and ease of achieving a higher effect of reducing the occurrence of falling-off of the electrode material, the concentration of LiSO₃F in the nonaqueous electrolyte may be 0.3% by mass or more, and may be 0.6% by mass or more. Any combination of these upper limit values and lower limit values may be made. Such a concentration of LiSO₃F is the concentration value (initial concentration value) in the nonaqueous electrolyte being used in assembling a secondary battery with a pin shape. The concentration of LiSO₃F that is required for the nonaqueous electrolyte collected from a pin-shaped secondary battery, may be within these ranges described above. In the pin-shaped secondary battery, LiSO₃F is decomposed and thereby forms an SEI film derived from the LiSO₃F. Therefore, the concentration of LiSO₃F in the nonaqueous electrolyte changes during storing or use, for example. For this reason, when analyzing the nonaqueous electrolyte collected from a pin-shaped secondary battery, it is sufficient that LiSO₃F remains in the nonaqueous electrolyte in a concentration equal to or more than the lower detection limit of concentration. Therefore, the upper limit of concentration of LiSO₃F falls in the range described above, and the lower limit of the concentration may be equal to or more than the detection limit of concentration.

In the case where the nonaqueous electrolyte includes LiFSI, the concentration of LiFSI in the nonaqueous electrolyte is 1.1 mol/L or less in a case that the outer diameter R is 3.0 mm or more and 3.5 mm or less, and the concentration is 1.0 mol/L or less in a case that the outer diameter R exceeds 3.5 mm and is 6.5 mm or less. In addition, in a case that the outer diameter R is 3.0 mm or more and 6.5 mm or less, the concentration of LiFSI in the nonaqueous electrolyte may be 1.0 mol/L or less. From the standpoint of ease of forming the SEI film having a more uniform and excellent film quality and ease of achieving a higher effect of reducing the occurrence of falling-off of the electrode material, the concentration of LiFSI in the nonaqueous electrolyte may be 0.3 mol/L or more, and may be 1.0 mol/L or more. Any combination of these upper limit values and lower limit values may be possible. Such a concentration of LiFSI is the concentration (initial concentration) in the nonaqueous electrolyte being used in assembling a secondary battery with a pin shape. The concentration of LiFSI that is required for the nonaqueous electrolyte collected from a pin-shaped secondary battery may be within these ranges described above. In the pin-shaped secondary battery, the LiFSI is decomposed and thereby forms an SEI film derived from the LiFSI. Therefore, the concentration of LiFSI in the nonaqueous electrolyte changes during storing or use, for example. For this reason, when analyzing the nonaqueous electrolyte collected from a pin-shaped secondary battery, it is sufficient that LiFSI remains in the nonaqueous electrolyte in a concentration equal to or more than the lower detection limit of concentration. Therefore, the upper limit of concentration of LiFSI falls in the ranges described above, and the lower limit of the concentration may be equal to or more than the detection limit of concentration.

Qualitative analysis and quantitative analysis of LiSO₃F and LiFSI may be performed by gas chromatography-mass spectroscopy (GC-MS) using the nonaqueous electrolyte.

The supporting salt is not particularly limited and may employ any supporting salt (e.g., a lithium salt) usable in lithium-ion secondary batteries.

Examples of the supporting salt (lithium salt) include, lithium salts of fluorine-containing acid [e.g., lithium hexafluorophosphate (LiPF₆), lithium tetrafluoroborate (LiBF₄)], lithium perchlorate (LiClO₄), lithium salts of fluorine-containing acid imide [e.g., lithium bis(trifluoromethylsulfonyl)imide (LiN(CF₃SO₂)₂], and lithium salts of fluorine-containing acid methide [e.g., lithium tris(trifluoromethylsulfonyl)methide (LiC(CF₃SO₂)₃)]. These supporting salts may be used singly or in combination of two or more kinds. LiFSI is included in the lithium salts of fluorine-containing acid imide, and also functions as a supporting salt. The nonaqueous electrolyte may include LiFSI and a lithium salt other than LiFSI. Moreover, the nonaqueous electrolyte is not limited to this case, and may also include a lithium salt other than LiFSI as a supporting salt, and LiSO₃F described above.

Examples of the nonaqueous solvent include cyclic carbonates (including derivatives [e.g., substituted compounds having substituents]), chain carbonates (e.g., dimethyl carbonate, diethyl carbonate, and ethyl methyl carbonate (EMC]), chain ethers (e.g., 1,2-dimethoxyethane), cyclic ethers (including derivatives [e.g., substituted compounds having substituents]), lactones (e.g., γ-butyrolactone), amides (e.g., N,N-dimethylformamide, and acetamide), nitriles (e.g., acetonitrile), nitroalkanes (e.g., nitromethane), sulfoxides (e.g., dimethyl sulfoxide), and sulfolane compounds (e.g., sulfolane). Examples of the cyclic carbonates include propylene carbonate, ethylene carbonate (EC), butylene carbonate, vinylene carbonate, and vinyl ethylene carbonate. Examples of the cyclic ethers include tetrahydrofuran and dioxolane. The nonaqueous electrolyte may include one kind of nonaqueous solvent or in a combination of two or more kinds thereof.

The concentration of the supporting salt in the nonaqueous electrolyte is not particularly limited and is, for example, 0.5 mol/L or more and 2 mol/L or less. In the case where the nonaqueous electrolyte includes LiFSI, the total concentration of the supporting salt including LiFSI may fall in this range.

The nonaqueous electrolyte may include an additive other than LiSO₃F or LiFSI, as necessary. Examples of the additive include at least one selected from the group consisting of propanesultone, propenesultone, ethylene sulfate, vinylene carbonate (VC), fluoroethylene carbonate, and vinyl ethylene carbonate. The nonaqueous electrolyte may include VC, and may include VC and another additive. The concentration of these additives in the nonaqueous electrolyte may be, for example, 3% by mass or less (e.g., 0.01% by mass or more and 3% by mass or less).

### Battery Case

The battery case has a cylindrical shape and has a cylindrical shape having an opening and a bottom. The battery case accommodates the wound electrode group and the nonaqueous electrolyte therein.

The outer diameter R of the battery case is 3.0 mm or more and 6.5 mm or less. The outer diameter R exceeding 6.5 mm hardly causes the falling-off of the electrode material. Therefore, even the nonaqueous electrolyte including LiSO₃F or LiFSI, provides either almost no effect of reducing the falling-off of the electrode material or an insufficient effect of reducing the falling-off even if possible. In the case where the outer diameter R is 3.0 mm or more and 6.5 mm or less, the nonaqueous electrolyte including LiSO₃F in a particular concentration remarkably reduces the falling-off of the electrode material, leading to a great reduction in the occurrence rate of internal short-circuits.

The thickness (maximum thickness) of the bottom of the battery case may be 0.08 mm or more and 0.2 mm or less. The thickness (maximum thickness) of the side wall of the battery case may be 0.08 mm or more and 0.2 mm or less. These thicknesses are respective thicknesses of the bottom and side wall of the battery case of the secondary battery with a pin shape after having been assembled.

The battery case is, e.g., a metal can. Examples of material constituting the battery case include at least one selected from the group consisting of aluminum, aluminum alloys (e.g., alloys containing trace amounts of other metals such as manganese, copper, etc.), iron, and iron alloys (including stainless steel). The battery case may be plated (with e.g., nickel), as necessary. The material constituting the battery case may be appropriately determined in accordance with the polarity of the battery case.

The polarity of the battery case may be arbitrarily determined. That is, the battery case may be either an external positive-electrode terminal or an external negative-electrode terminal. From the standpoint of effectively utilizing the volume inside the battery case, the electrode group may be constituted such that the electrode having the same polarity as the battery case is located on the outermost peripheral side of the electrode group. A current-collecting lead drawn out from the electrode on the outermost peripheral side is connected to an inner wall of the battery case.

### Sealing Unit

The secondary battery with a pin shape may include the battery case having a cylindrical shape with an opening and a bottom, and a sealing unit closing the opening of the battery case.

The shape of the sealing unit is not particularly limited, and may be a disk shape, a shape (hat shape) in which the middle portion of a disk protrudes in the thickness direction thereof, or any other shape. The sealing unit may have a space formed therein or may have no space therein. The sealing unit with the hat shape may include a brim with a ring shape and a terminal portion protruding from an inner periphery of the brim in one of the thickness directions of the brim. Moreover, the sealing unit may include a brim with a ring shape and a terminal portion protruding from the inner periphery of the brim in both of the thickness directions of the brim. Such a sealing unit has an outside shape that looks like two hats stacked together with their brims facing each other. The protruding terminal portion may have a circular columnar shape, or a cylindrical shape having a top surface (or having a top surface and a bottom surface). The sealing unit may include a safety valve.

Examples of the material constituting the sealing unit include aluminum, aluminum alloys (e.g., alloys containing trace amounts of other metals such as manganese, copper, etc.), iron, and iron alloys (including stainless steel). The sealing unit may be plated with e.g., nickel, as necessary. The material constituting the sealing unit may be appropriately determined in accordance with the polarity of the sealing unit.

The polarity of the sealing unit may be arbitrarily determined. The sealing unit may have a polarity opposite to that of the battery case. For example, the battery case may be connected to the negative electrode to be used as the external negative-electrode terminal, and the sealing unit may be connected to the positive electrode to be used as the external positive-electrode terminal. The sealing unit is electrically connected to either the negative electrode or the positive electrode with, e.g., a current-collecting lead.

The opening of the battery case may be sealed with the sealing unit by a known method. The sealing may be carried out by welding. Moreover, the opening of the battery case and the sealing unit may be sealed by crimping them together with a gasket interposed therebetween. In the sealing by crimping, for example, the opening end of the battery case may be bent inward toward the sealing unit with the gasket interposed therebetween.

### Gasket

The gasket is interposed between the opening (specifically, opening end) of the battery case and the sealing unit (specifically, peripheral edge of the sealing unit), thereby insulating the both from each other and having a function of ensuring hermeticity of the secondary battery with the pin shape.

The gasket may have, for example, a ring shape covering a peripheral edge of the sealing unit. When used with a sealing unit of a disk shape, the gasket may have a shape covering the peripheral edge of the disk shape. When used with a sealing unit of a hat shape, the gasket may have a shape covering the peripheral edge of the brim.

The material of the gasket may be made of an insulating material, such as a synthetic resin. Such an insulating material is not particularly limited, and may employ any material usable in gaskets of lithium-ion secondary batteries. Examples of the insulating material include polyolefins, resins, polyphenylene sulfide, polyether ether ketone, polyamides, polyimides, and liquid crystal polymers. The gasket may include one insulating materials or in a combination of two or more materials.

The gasket may include a known additive (e.g., a filler such as an inorganic fiber), as necessary.

### Current-Collecting Lead

The material of the current-collecting lead that electrically connects the positive electrode to either the battery case or the sealing unit may be made of, for example, a metal such as aluminum, titanium, or nickel, or an alloy thereof.

The material of the current-collecting lead that electrically connects the negative electrode to either the battery case or the sealing unit may employ, for example, a metal such as copper or nickel, or an alloy thereof.

The shape of each of the current-collecting leads is not particularly limited and may have, for example, a wire shape or a sheet shape (or a ribbon shape)

### Insulative Ring

An insulative ring (first insulative ring) is disposed between the upper portion of the electrode group and the sealing unit. In addition, another insulative ring (second insulative ring) may be disposed at the peripheral edge of the sealing unit.

Each of the insulative rings is not particularly limited and may employ any insulative ring usable in lithium-ion secondary batteries. The material of the insulative ring is not particularly limited as long as it is an insulating material. For example, the material may be appropriately determined from the insulating materials exemplified earlier as the material of the gasket.

The following configurations of the secondary battery with the pin shape are not limited to the foregoing examples and may be appropriately chosen from known structures and compositions: The configurations of the secondary battery with a pin shape (e.g., the positive electrode, negative electrode, separator, material of the battery case, sealing unit, insulative ring, and current-collecting lead) except for the inner diameter r of the hollow of the electrode group, the outer diameter R of the battery case, the ratio r/R, and the concentration of either LiSO₃F or LiFSI in the nonaqueous electrolyte.

FIG. 1 is a schematic longitudinal cross-sectional view of a secondary battery with a pin shape according to an exemplary embodiment of the present disclosure.

Pin-shaped secondary battery (cylindrical nonaqueous electrolyte secondary battery) 100 includes battery case 20 having a cylindrical shape with an opening and a bottom, wound electrode group 10 and nonaqueous electrolyte 90 both of which are accommodated in battery case 20, and sealing unit 40 closing the opening of battery case 20. Electrode group 10 is formed by, for example, winding positive electrode 11, negative electrode 12, and separator 13 with a winding core while separator 13 is disposed between positive electrode 11 and negative electrode 12. The winding core is then pulled out from there, leaving hollow C at the middle of electrode group 10. Accordingly, positive electrode 11, negative electrode 12, and separator 13 are wound around hollow C as the center. In the pin-shaped secondary battery according to the present disclosure, the outer diameter R of battery case 20 is 3.0 mm or more and 6.5 mm or less. Moreover, the ratio r/R of the inner diameter r of hollow C to the outer diameter R is 0.1 or more and 0.3 or less. The nonaqueous electrolyte includes at least one of LiSO₃F and LiFSI in a particular concentration.

Sealing unit 40 has a hat shape, and includes brim (brim 40a) with a brim and terminal portions 40b and 40c with circular columnar shapes. At the peripheral edge of sealing unit 40, insulating gasket 30 with a ring shape is disposed so as to cover brim 40a. Then, the peripheral edge of sealing unit 40 is crimped with the opening end of battery case 20 via gasket 30 interposed therebetween.

First insulative ring 50A is disposed between the upper end surface (top face) of electrode group 10 and the bottom surface of sealing unit 40. Second insulative ring 50B that has an annular shape and made of an electrically insulating material is disposed so as to cover the surface of gasket 30 at and around the outer surface of the opening end having been bent of battery case 20.

The polarity of battery case 20 and sealing unit 40 may be arbitrarily determined. That is, battery case 20 may be any of the positive-electrode terminal and the negative-electrode terminal. In an example shown in FIG. 1, battery case 20 is connected to negative electrode 12 and thereby serves as the external negative-electrode terminal, and sealing unit 40 is connected to positive electrode 11 and thereby serves as the external positive-electrode terminal.

Positive electrode 11 is electrically connected to sealing unit 40 via positive-electrode current-collecting lead 60. Sealing unit 40 functions as the positive-electrode terminal. One end portion of negative-electrode current-collecting lead 70 is connected to the inner-side wall of battery case 20 at welding point 70a. Negative electrode 12 is electrically connected to battery case 20 via negative-electrode current-collecting lead 70. Battery case 20 functions as the external negative-electrode terminal.

### Examples

The present disclosure will be detailed below based on Examples and Comparative Examples; however, the present invention is not limited to the following Examples.

### Batteries E1-E2, and C1-C3

Cylindrical nonaqueous electrolyte secondary batteries (cylindrical lithium-ion secondary batteries) shown in FIG. 1 were produced according to the following procedures.

### (1) Production of Positive Electrode 11A

Positive-electrode slurry was prepared by mixing 100 parts by mass of lithium cobalt oxide as a positive-electrode active material, 4 parts by mass of acetylene black as a conductive agent, and 4 parts by mass of PVdF as a binder, with NMP added as a dispersion medium. The positive-electrode slurry was applied on both surfaces of an aluminum foil (thickness of 13 µm) as a positive-electrode current collector, followed by drying and then compressing the resulting product in the thickness direction, thereby producing positive electrode 11 (thickness of 81 µm) in which the positive-electrode active material layers are provided on both surfaces of the positive-electrode current collector. Positive electrode 11 had an exposed portion of the positive-electrode current collector) in which no positive-electrode active material layer was disposed on the positive-electrode current collector a portion thereof in the width direction of the positive electrode (the direction parallel to the winding axis of the electrode group). Then, an end portion of positive-electrode current-collecting lead 60 with a ribbon shape made of aluminum is connected to the exposed portion of the positive-electrode current collector. In addition, exposed portions were formed of the positive-electrode current collector at which no positive-electrode active material layers were disposed on both surfaces at both end portions of the positive electrode in the longitudinal direction (the direction perpendicular to the width direction), followed by sticking insulating adhesive tapes to cover the exposed portions of the positive-electrode current collector, thereby forming insulating layers.

### (2) Production of Negative Electrode 12

A negative-electrode slurry was prepared by mixing 100 parts by mass of synthetic graphite powder as a negative-electrode active material, 1 part by mass of styrene-methacrylic acid-butadiene copolymer as a binder, and 1 part by mass of CMC as a thickener, followed by dispersing the resulting mixture in deionized water. The negative-electrode slurry was applied on both surfaces of a copper foil with a thickness of 6 µm as a negative-electrode current collector, followed by drying and then compressing the resulting product in the thickness direction, thereby producing negative electrode 12 with a thickness of 109 µm. Negative electrode 12 had exposed portions of the negative-electrode current collector in which no negative-electrode active material layers were disposed thereon at positions corresponding to the innermost and outermost peripheries of negative electrode 12 in electrode group 10. An end portion of negative-electrode current-collecting lead 70 with a ribbon shaped made of nickel was connected to the exposed portion at the outermost periphery of negative electrode 12.

### (3) Production of Electrode Group 10

Separator 13 with a strip shape was inserted through a slit of a winding core with a circular columnar shape, and was folded at the slit into a two-ply sheet. Separator 13, positive electrode 11, and negative electrode 12 were placed on one another such that separator 13 was interposed between positive electrode 11 and negative electrode 12 after being wound. Positive electrode 11 and negative electrode 12 were placed such that the end portion on the innermost peripheral side of negative electrode 12 was close to the winding core, and such that the positive-electrode active material layer of positive electrode 11 faced the negative-electrode active material layer of negative electrode 12. In this state, positive electrode 11, negative electrode 12, and separator 13 were wound about the winding core, thereby producing wound electrode group 10. The winding core was then pulled out while the winding is slightly loosened, followed by sticking an insulating tape for fixing on the winding end, thereby fixing electrode group 10. The size of the winding core was determined such that the ratio r/R = 0.3 for the outer diameter of the battery case R = 4.0 mm. The number of winding turns for the electrode groups were adjusted such that the ratio Ra = 98%.

### (4) Preparation of Nonaqueous Electrolyte

LiPF6, VC, and additives indicated in TABLE 1 were dissolved in mixed solvents each contained EC and EMC in proportions by volume of 1:2 such that the concentrations of the additives were equal to respective corresponding ones indicated in TABLE 1, thereby preparing the nonaqueous electrolytes. The concentration of LiPF₆ in the nonaqueous electrolyte was 1.1 mol/L, and the concentration of VC was 2.5% by mass.

### (5) Production of Cylindrical Nonaqueous Electrolyte Secondary Battery 100

Electrode group 10 produced in process (3) was inserted into battery case 20 with a cylindrical shape with a bottom (outer diameter R = 4.0 mm) and an opening and made of a nickel-plated iron plate. Then, the other end portion of negative-electrode current-collecting lead 70 was connected by welding to the inner-side wall of battery case 20 at welding point 70a. Welding point 70a was located closer to the opening of battery case 20 than the upper end surface of electrode group 10 was. First insulative ring 50A was disposed on the upper portion of electrode group 10. Then, the other end portion of positive-electrode current-collecting lead 60 drawn out from electrode group 10 was connected to the bottom surface of sealing unit 40 through a hole in first insulative ring 50A. Insulating gasket 30 with a ring shape had been fitted at the peripheral edge of sealing unit 40. The nonaqueous electrolyte prepared in process (4) was put into battery case 20. Sealing unit 40 made of nickel-plated iron was placed in the opening of battery case 20. Then, the opening was sealed by crimping the opening end of battery case 20 onto the peripheral edge of sealing unit 40 while gasket 30 is interposed between the opening end of battery case 20 onto the peripheral edge of sealing unit 40.

Second insulative ring 50B was formed by applying a butyl rubber-based insulating paint in an annular shape so as to cover both the outer surface of the opening end having been bent of battery case 20 and the surface of gasket 30 in the vicinity of the outer surface of the opening end.

A total of 50 cylindrical nonaqueous electrolyte secondary batteries 100 with a nominal capacity of 20.0 mAh were thus produced.

### (6) Evaluation

### Internal Short-Circuit Occurrence Rate

The batteries were subjected to initial charge at a constant current of 1C at 25°C for 18 minutes, and then left at rest at 25°C for one week. Then, the open circuit voltage of each battery was measured. When the measured open circuit voltage was a reference value (3.60 V) or lower, it was determined that an internal short-circuit occurred. For each battery, a ratio of the number of batteries with the internal short-circuits to the number of 50 batteries was determined. Each battery was evaluated for a rate of batteries with internal short-circuits, as an internal short-circuit occurrence rate (%) with respect to the number rate of batteries C1 with internal short-circuits being regarded as 100%.

The evaluation result is shown in TABLE 1. In TABLE 1, E1 and E2 are Examples, and C1 to C3 are Comparative Examples.

**TABLE 1**

| | C1 | C2 | C3 | E1 | E2 |
|---|---|---|---|---|---|
| Outer Diameter R (mm) | 4.0 | | | | |
| r/R | 0.3 | | | | |
| Additive | - | FEC | PS | LiSO₃F | LiSO₃F |
| Concentration (% by mass) | 0 | 1.0 | 1.0 | 0.6 | 1.2 |
| Internal Short-Circuit Occurrence Rate (%) | 100.0 | 95.5 | 97.2 | 72.9 | 69.4 |

As shown in Table 1, the effects of reducing internal short-circuits of the nonaqueous electrolyte including FEC or PS are not greatly different from that of battery C1 not including any additive other than VC (comparing battery C1 with batteries C2 and C3). In contrast, batteries E1 and E2 including the nonaqueous electrolyte including LiSO₃F remarkably reduces internal short-circuit occurrence rates. This is because LiSO₃F reduces falling-off of the electrode material of the negative electrode.

### Batteries E3-E5, and C4-C8

The sizes of the winding cores for use in producing electrode groups were changed so as to cause the ratios r/R to be equal to the values indicated in Table 2 while the outer diameter R was 4.0 mm of the battery case. Similarly to battery C1 or E2 except this described above, a total of 50 cylindrical nonaqueous electrolyte secondary batteries for each example were produced, and were evaluated for their internal short-circuit occurrence rates. All the batteries had the battery case with outer diameter R of 4.0 mm.

The evaluation result is shown in Table 2. In Table 2, numerals in the upper row are the internal short-circuit occurrence rates, and symbols in the lower row indicate batteries. In Table 2, for each ratio r/R, the internal short-circuit occurrence rate with the concentration of 1.2% by mass of LiSO₃F is indicated, as a relative value, with respect to the internal short-circuit occurrence rate with the concentration of 0 (zero)% by mass of LiSO₃F being regarded as 100%. In Table 2, the results for batteries C1 and E2 are also shown. In Table 2, batteries E2-E5 are Examples, and batteries C1 and C4-C8 are Comparative Examples.

**TABLE 2**

| Concentration of LiSO₃F (% by mass) | r/R=0.40 | r/R=0.30 | r/R=0.20 | r/R=0.15 | r/R=0.10 |
|---|---|---|---|---|---|
| 0 | 100.0 C7 | 100.0 C1 | 100.0 C4 | 100.0 C5 | 100.0 C6 |
| 1.2 | 100.0 C8 | 69.4 E2 | 57.9 E3 | 57.5 E4 | 68.9 E5 |

As shown in Table 2, in the case of the ratio r/R larger than 0.3, there is no difference in the internal short-circuit occurrence rate between the nonaqueous electrolyte including LiSO₃F and the nonaqueous electrolyte not including LiSO₃F. In the case of the ratio r/R larger than 0.3, even though LiSO₃F reduces falling-off of the electrode material of the negative electrode, LiSO₃F does not affect reducing the internal short-circuits caused by the falling-off. In contrast, in the cases of the ratios r/R of 0.1 or more and 0.3 or less, the internal short-circuit occurrence rates are more remarkably reduced with the nonaqueous electrolyte including LiSO₃F than with the nonaqueous electrolyte not including LiSO₃F. Although the internal short-circuit occurrence rate increases greatly in the cases of the ratios r/R equal to or smaller than 0.3, LiSO₃F effectively reduces the falling-off of the electrode material of the negative electrodes, resulting in the effective reduction in internal short-circuits.

### Batteries E6-E14 and C9-C21

Battery cases with outer diameters R indicated in Table 3 were used, and the sizes of the winding cores were changed so as to exhibit r/R indicated in Table 3. The number of winding turns for the electrode groups were adjusted such that the ratio Ra = 98%. Moreover, nonaqueous electrolytes included LiSO₃F in concentrations indicated in Table 3. Similarly to battery E1 or C1 except for those described above, cylindrical nonaqueous electrolyte secondary batteries were produced and evaluated for their internal short-circuit occurrence rates. The nominal capacity of each battery was 13.0 mAh (R = 3.0 mm), 20.0 mAh (R = 4.0 mm), 52.0 mAh (R = 6.5 mm), 120 mAh (R = 9.0 mm), or 450 mAh (R = 18 mm).

### Falling-off Area of Electrode Material of Negative Electrode

After having been subjected to initial charge and then left at rest at 25°C for one week by the procedure described above, the following batteries were disassembled: batteries C9, C1, and C10-C12 each including LiSO₃F in a concentration of 0 (zero)% by mass, and batteries E8, E2, E14, C16, and C20 each including LiSO₃F in a concentration of 1.2% by mass. Then, for each battery, the falling-off area of the negative electrode in which a negative-electrode mixture layer had fallen off from there was determined, and then an area ratio (% by area) of the falling-off area to the area of the negative electrode on which the negative-electrode mixture layer was formed. From each of the example cases, three batteries were sampled and examined as follows: For each sampled battery, the area ratio of the falling-off area in which the negative-electrode mixture layer had been fallen. Then, an average value (% by area) of the three thus-determined area ratios was calculated. The calculated average value was used as the index of the falling-off area of electrode material of the negative electrode at the initial stage.

### High-Rate Cycle Characteristics

After the batteries have been subjected to initial charge and then left at rest at 25°C for one week by the procedure described above, the following charge and discharge are each performed once (an initial charge/discharge cycle) for each battery. At this time, the discharge voltage was monitored to determine the discharge capacity that was used as the initial discharge capacity (mAh). Then, at 20°C, the following charge/discharge cycles were repeated 1000 cycles in total including the foregoing initial charge/discharge cycle. The discharge voltage during the discharge at the 1000th cycle was monitored to determine the discharge capacity (mAh). For three batteries sampled from each of the example cases, both an average value of the initial discharge capacities and an average value of the discharge capacities at the1000th cycle were determined. Then, a ratio (%) of the resulting average value of the discharge capacities at the1000th cycle to the resulting average value of the initial discharge capacities were determined as the capacity retention ratio (%) while the resulting average value of the initial discharge capacities was regarded as 100%. Then, for each outer diameter R, the batteries having been subjected to a high-rate cycle test were evaluated for their capacity retention ratios based on their relative capacity retention ratios (%) determined with respect to the capacity retention ratio, regarded as 100%, of the batteries including LiSO₃F in a concentration of 0 (zero)% by mass.

Charging: Constant current charging at a current of 3C up to 4.35 V, followed by constant voltage charging at a voltage of 4.35 V until the current decreases to 0.05 C.

Discharging: Constant current discharging at a current of 1C until the voltage decreases to 3.0 V.

The results of the internal short-circuit occurrence rates are shown in Table 3. In Table 3, numerals in the upper row are the internal short-circuit occurrence rates, and symbols in the lower row indicate the batteries. In Table 3, for each value of the outer diameters R, the internal short-circuit occurrence rate at each concentration of LiSO₃F is indicated as a relative value (%) while the internal short-circuit occurrence rate at the concentration of 0 (zero)% by mass of LiSO₃F is regarded as 100%. In Table 3, the results for batteries C1, E1, and E2 are also shown. In Table 3, batteries E1, E2, and E6-E14 are Examples and batteries C1, and C9-C21 are Comparative Examples.

**TABLE 3**

| Outer Diameter R (mm) | r/R | Concentration of LiSO₃F | | | | |
|---|---|---|---|---|---|---|
| | | 0% by mass | 0.3 % by mass | 0.6 % by mass | 1.2 % by mass | 1.5 % by mass |
| 3.0 | 0.3 | 100.0 C9 | 87.6 E6 | 62.6 E7 | 39.6 E8 | 44.0 E9 |
| 4.0 | | 100.0 C1 | 83.3 E10 | 72.9 E1 | 69.4 E2 | 72.9 E11 |
| 6.5 | | 100.0 C10 | 83.3 E12 | 75.0 E13 | 77.8 E14 | 94.4 C13 |
| 9.0 | | 100.0 C11 | 90.0 C14 | 90.0 C15 | 92.5 C16 | 92.5 C17 |
| 18 | | 100.0 C12 | 92.9 C18 | 95.2 C19 | 92.9 C20 | 92.9 C21 |

As shown in Table 3, in the case of the outer diameter R is more than 6.5 mm, even the nonaqueous electrolyte including LiSO₃F provides an insufficient effect of reducing the internal short-circuit occurrence rates. In such cases, increasing the concentration of LiSO₃F results in only a slight change in the internal short-circuit occurrence rates (comparing battery C11 with batteries C14-C17, and comparing battery C12 with batteries C18-C21). In contrast, in the case of the outer diameter R ranging from 3.0 mm to 6.5 mm, the nonaqueous electrolytes including LiSO₃F in particular concentrations largely reduces the internal short-circuit occurrence rates.

Table 4 indicates the ratios of falling-off areas of the negative-electrode mixture layers at both the concentration of 0 (zero)% by mass of LiSO₃F and the concentration of 1.2% by mass of LiSO₃F. Symbols in the lower row listed below the ratios of the falling-off areas indicate the batteries. In addition, for each outer diameter R, another ratio of the ratio of the falling-off area at the concentration of 1.2% by mass of LiSO₃F to the ratio, regarded as 100%, of the falling-off area at the concentration of 0 (zero)% by mass of LiSO₃F. Such another ratio indicates the effect of improving the falling-off. The smaller this ratio, the more greatly the reduction in falling-off of the negative-electrode mixture is achieved.

**TABLE 4**

| Outer Diameter R (mm) | r/R | Concentration of LiSO₃F | | Effect of Improving Falling-Off |
|---|---|---|---|---|
| | | 0% by mass | 1.2 % by mass | |
| 3.0 | 0.3 | 17.3 C9 | 8.9 E8 | 51.4 |
| 4.0 | | 13.8 C1 | 6.1 E2 | 44.2 |
| 6.5 | | 9.9 C10 | 5.0 E14 | 50.5 |
| 9.0 | | 7.2 C11 | 4.9 C16 | 68.1 |
| 18 | | 4.5 C12 | 4.0 C20 | 88.9 |

As shown in Table 4, in the case that the outer diameter R is more than 6.5, the falling-off areas of the negative-electrode mixture layers are small (batteries C11 and C12). In this case, even the nonaqueous electrolyte including LiSO₃F provides an insufficient effect of reducing the falling-off areas (comparing battery C11 with battery C16, and comparing battery C12 with battery C20). In contrast, in the case that the outer diameter R ranges from 3.0 mm to 6.5 mm, the falling-off areas of the negative-electrode mixture layers are large (comparing batteries C11 and C16 with batteries C9, C1, and C10). Even in the case where the negative-electrode mixture layers are prone to easily fall off, the use of the nonaqueous electrolyte including LiSO₃F results in a great reduction in falling-off of the negative-electrode mixture layers (comparing C9, C1, and C10 with battery E8, E2, and E14). The degree of effect of improving the falling-off is remarkably greater in the outer diameter R ranging from 3.0 mm to 6.5 mm than in the outer diameter R more than 6.5 mm. The tendency shown in Table 4 is relatively similar to the tendency of the internal short-circuit occurrence rates shown in Table 3 in the case that LiSO₃F has a concentration of 1.2% by mass. It is thought, from this, that the reduction in falling-off of the negative-electrode mixture layers decreases the occurrence of the internal short-circuits.

Table 5 shows the relative values of the capacity retention ratios after the high-rate charge/discharge was repeated 1000 cycles. Numerals in the upper row are the relative values of the capacity retention ratios, for each outer diameter R, with the capacity retention ratio at the concentration of 0 (zero)% by mass of LiSO₃F regarded as 100%. Symbols in the lower row indicate the batteries.

**TABLE 5**

| Outer Diameter R (mm) | r/R | Concentration of LiSO₃F | | | | |
|---|---|---|---|---|---|---|
| | | 0% by mass | 0.3 % by mass | 0.6 % by mass | 1.2 % by mass | 1.5 % by mass |
| 3.0 | 0.3 | 100.0 C9 | 123 E6 | 125 E7 | 128 E8 | 126 E9 |
| 4.0 | | 100.0 C1 | 121 E10 | 122 E1 | 123 E2 | 118 E11 |
| 6.5 | | 100.0 C10 | 120 E12 | 121 E13 | 122 E14 | 117 C13 |
| 9.0 | | 100.0 C11 | 102 C14 | 103 C15 | 103 C16 | 103 C17 |
| 18 | | 100.0 C12 | 105 C18 | 107 C19 | 107 C20 | 106 C21 |

As shown in Table 5, in the case that the outer diameter R is more than 6.5 mm, even the nonaqueous electrolyte including LiSO₃F provides a relatively low effect of improving the capacity retention ratios after the high-rate charge/discharge is repeated (comparing battery C11 with batteries C14-C17, and comparing battery C12 with batteries C18-C21). In contrast, in the case that the outer diameter R ranges from 3.0 mm to 6.5 mm, the nonaqueous electrolytes including LiSO₃F in particular concentrations largely increases the capacity retention ratios after the high-rate charge/discharge is repeated (comparing battery C9 with batteries E6-E9, comparing battery C1 with batteries E10, E1, E2, and E11, and comparing battery C10 with batteries E12-E14).

### Batteries E15-E24 and C22-C36

Nonaqueous electrolytes prepared by using LiFSI instead of LiSO₃F. The concentration of LiFSI in each of the nonaqueous electrolytes was indicated in Table 6. The concentration of LiPF6 was adjusted such that the total concentration of LiPF6 and LiFSI was 1.1 mol/L. The battery cases with outer diameters R indicated in Table 6 were used, and the sizes of the winding cores were changed so as to provide r/R indicated in Table 6. The number of winding turns for the electrode groups was adjusted such that the ratio Ra = 98%. Similarly to battery E1 or C1 except for those described above, cylindrical nonaqueous electrolyte secondary batteries were produced and evaluated in their internal short-circuit occurrence rates.

The results are shown in Table 6. In Table 6, numerals in the upper row are the internal short-circuit occurrence rates, and symbols in the lower row indicate the battery. In Table 6, for each value of the outer diameters R, the internal short-circuit occurrence rate at each concentration of LiFSI is indicated as a relative value (%) while the internal short-circuit occurrence rate at a concentration of 0 (zero) mol/L of LiFSI is regarded as 100%. In Table 6, batteries E15-E24 are Examples and batteries C22-C36 are Comparative Examples.

**TABLE6**

| Outer Diameter R (mm) | r/R | Concentration of LiFSI | | | | |
|---|---|---|---|---|---|---|
| | | 0 mol/L | 0.3 mol/L | 0.6 mol/L | 1.2 mol/L | 1.5 mol/L |
| 3.0 | 0.3 | 100.0 C22 | 87.6 E15 | 82.4 E16 | 72.5 E17 | 83.5 E18 |
| 4.0 | | 100.0 C23 | 86.8 E19 | 82.6 E20 | 78.1 E21 | 91.3 C27 |
| 6.5 | | 100.0 C24 | 86.1 E22 | 75.0 E23 | 75.0 E24 | 91.7 C28 |
| 9.0 | | 100.0 C25 | 97.5 C29 | 95.0 C30 | 92.5 C31 | 95.0 C32 |
| 18 | | 100.0 C26 | 90.5 C33 | 97.6 C34 | 95.2 C35 | 90.5 C36 |

As shown in Table 6, also in the cases with LiFSI, effects similar to those in the cases with LiSO₃F shown in Table 3 are obtained. More specifically, in the case that the outer diameter R is more than 6.5 mm, even of the nonaqueous electrolyte including LiFSI provides a low effect of reducing the internal short-circuit occurrence rates. In this case, increasing the concentration of LiFSI results in only a slight change in the internal short-circuit occurrence rates (comparing battery C25 with batteries C29-C32, and comparing battery C26 with batteries C33-C36). In contrast, in the case that the outer diameter R ranging from 3.0 mm to 6.5 mm, the nonaqueous electrolytes including LiFSI in particular concentrations largely reduces the internal short-circuit occurrence rates (comparing battery C22 with batteries E15-E18, comparing battery C23 with batteries E19-E21, and comparing battery C24 with batteries E22-E24).

Moreover, also in the case where the nonaqueous electrolytes including LiFSI were used, the tendency similar to those of Tables 4 and 5 are observed.

### Batteries E25-E27 and C37-C38

Nonaqueous electrolytes including both LiSO₃F and LiFSI were used. In each of the nonaqueous electrolytes, the concentration of LiSO₃F was 1.2% by mass and the concentration of LiFSI was 0.5 mol/L. Further, the concentration of LiPF₆ was adjusted such that the total concentration of LiPF₆ and LiFSI was 1.1 mol/L. The battery cases with outer diameters R indicated in Table 7 were used, and the sizes of the winding cores were changed so as to provide r/R indicated in Table 7. Further, the number of winding turns of the electrode groups were adjusted such that the ratio Ra = 98%. Similarly to battery E1 except for those described above, cylindrical nonaqueous electrolyte secondary batteries were produced and evaluated in their internal short-circuit occurrence rates.

Table 7 shows the results. In Table 7, numerals in the upper rows are the internal short-circuit occurrence rates, and symbols in the lower row indicate the batteries. In Table 7, the results of batteries C1 and C9-C12 are also shown. In Table 7, for each value of the outer diameters R, the internal short-circuit occurrence rate of each battery is indicated as a relative value (%) with respect to the internal short-circuit occurrence rate at a concentration of 0 (zero)% by mass of LiSO₃F (batteries C1 and C9-C12) being regarded as 100%. In Table 7, batteries E25-E27 are Examples, and batteries C1, C9-C11, and C37-C38 are Comparative Examples.

**TABLE7**

| Outer Diameter R (mm) | r/R | Concentration of LiSO₃F 0 % by mass | Concentration of LiSO₃F 1.2 % by mass | Concentration of LiFSI 0.5 mol/L |
|---|---|---|---|---|
| 3.0 | 0.3 | 100.0 C9 | 38.5 E25 | |
| 4.0 | | 100.0 C1 | 69.4 E26 | |
| 6.5 | | 100.0 C10 | 72.2 E27 | |
| 9.0 | | 100.0 C11 | 87.5 C37 | |
| 18 | | 100.0 C12 | 90.5 C38 | |

As shown in Table 7, even in the cases where the nonaqueous electrolytes include both LiSO₃F and LiFSI, the internal short-circuit occurrence rates were reduced.

### INDUSTRIAL APPLICABILITY

A cylindrical nonaqueous electrolyte secondary battery according to the present disclosure reduces its initial internal short-circuits and ensure its high-capacity retention ratio when repetitively subjected to a charge/discharge cycle (in particular, high-rate charge/discharge cycles). Therefore, the battery is be used, as power sources of various electronic devices in various applications, for example, which require high capacity, high-rate cycle characteristics, high reliability, long service life, etc. Especially, the cylindrical nonaqueous electrolyte secondary battery according to the present disclosure is so small in size that it can be preferably used as power sources of various portable electronic devices (including glasses (e.g., 3D glasses), hearing aids, stylus pens, wearable terminals (earphones, smart watches, etc.).

### REFERENCE MARKS IN THE DRAWINGS

100 cylindrical nonaqueous electrolyte secondary battery
10 wound electrode group
C hollow
11 positive electrode
12 negative electrode
13 separator
20 battery case
30 gasket
40 sealing unit
40a brim
40b, 40c terminal portion
50A first insulative ring
50B second insulative ring
60 positive-electrode current-collecting lead
70 negative-electrode current-collecting lead
70a welding point
r inner diameter of hollow
R outer diameter of battery case

## Claims

1. A cylindrical nonaqueous electrolyte secondary battery comprising:
a battery case having a cylindrical shape;
a wound electrode group accommodated in the battery case; and
a nonaqueous electrolyte accommodated in the battery case, wherein
an outer diameter R of the battery case is 3.0 mm or more and 6.5 mm or less,
the electrode group has a hollow therein and includes one or more electrodes wound around the hollow,
a ratio r/R of an inner diameter r of the hollow of the electrode group to the outer diameter R is 0.1 or more and 0.3 or less,
the nonaqueous electrolyte includes at least one selected from the group consisting of LiSO₃F and LiFSI,
in a case that the nonaqueous electrolyte includes LiSO₃F, a concentration of LiSO₃F in the nonaqueous electrolyte is 1.5% by mass or less in a case of the outer diameter R being 3.0 mm or more and 5 mm or less, and a concentration of LiSO₃F is 1.2% by mass or less in a case of the outer diameter R exceeding 5 mm and being 6.5 mm or less, and
in a case that the nonaqueous electrolyte includes LiFSI, a concentration of LiFSI in the nonaqueous electrolyte is 1.1 mol/L or less in a case of the outer diameter R being 3.0 mm or more and 3.5 mm or less, and the concentration of LiFSI is 1.0 mol/L or less in a case of the outer diameter R exceeding 3.5 mm and being 6.5 mm or less.

2. The cylindrical nonaqueous electrolyte secondary battery according to claim 1, wherein
the concentration of LiSO₃F in the nonaqueous electrolyte is 1.2% by mass or less, and
the concentration of LiFSI in the nonaqueous electrolyte is 1.0 mol/L or less.

3. The cylindrical nonaqueous electrolyte secondary battery according to claim 1 or 2, wherein the concentration of LiSO₃F in the nonaqueous electrolyte is 0.3% by mass or more.

4. The cylindrical nonaqueous electrolyte secondary battery according to any one of claims 1 to 3, wherein the concentration of LiFSI in the nonaqueous electrolyte is 0.3 mol/L or more.

5. The cylindrical nonaqueous electrolyte secondary battery according to any one of claims 1 to 4, wherein the nonaqueous electrolyte includes at least LiSO₃F.

6. The cylindrical nonaqueous electrolyte secondary battery according to any of claims 1 to 5, wherein the nonaqueous electrolyte includes both LiSO₃F and LiFSI.

7. The cylindrical nonaqueous electrolyte secondary battery according to any one of claims 1 to 6, wherein the ratio r/R is 0.1 or more and 0.2 or less.

8. The cylindrical nonaqueous electrolyte secondary battery according to any one of claims 1 to 7, wherein
the one or more electrodes of the electrode group include a positive electrode and a negative electrode,
the electrode group further includes a separator disposed between the positive electrode and the negative electrode, and
in the electrode group, an end portion of the negative electrode at an innermost peripheral side of the negative electrode is disposed on a more inner side than an end portion of the positive electrode at an innermost peripheral side of the positive electrode.
